# EUROPEAN PATENT SPECIFICATION

(11) **EP 3 473 981 B1**
(45) Date of publication and mention of the grant of the patent: **27.01.2021**
(21) Application number: 18201034.8
(22) Date of filing: 17.10.2018
(51) Int. Cl.: G01C 21/36, G05D 1/02, F02D 41/14, G01S 5/16

(54) **SYSTEM FOR CONTROLLING A SELF-DRIVING VEHICLE AND METHOD FOR TRAINING THE SYSTEM**
SYSTEM ZUM STEUERN EINES SELBSTFAHRENDEN FAHRZEUGS UND VERFAHREN ZUM TRAINIEREN DES SYSTEMS
SYSTÈME DE COMMANDE D'UN VÉHICULE AUTONOME ET PROCÉDÉ D'ENTRAÎNEMENT DU SYSTÈME

(30) Priority: 18.10.2017 NL 2019756
(43) Date of publication of application: 24.04.2019
(73) Proprietor: Smit, Stephan Johannes, 3572 LK Utrecht (NL); Van Bentum, Johannes Wilhelmus Maria, 3583 HA Utrecht (NL)
(72) Inventor: Smit, Stephan Johannes, 3572 LK Utrecht (NL); Van Bentum, Johannes Wilhelmus Maria, 3583 HA Utrecht (NL)
(74) Representative: Patentwerk B.V.

(56) References cited:
- EP-A1- 3 219 564
- WO-A2-2017/120336
- DE-A1- 4 138 270
- US-A1- 2017 227 970
- HUBSCHNEIDER CHRISTIAN ET AL: "Adding navigation to the equation: Turning decisions for end-to-end vehicle control", 2017 IEEE 20TH INTERNATIONAL CONFERENCE ON INTELLIGENT TRANSPORTATION SYSTEMS (ITSC), IEEE, 16 October 2017 (2017-10-16), pages 1-8, XP033330568, DOI: 10.1109/ITSC.2017.8317923

## Description

The present invention relates to a system for controlling a self-driving vehicle controllable on the basis of control values and acceleration values and a method for training a system of this type.

Unmanned and, in particular, self-driving vehicles are increasingly used for baggage and parcel transport. They can easily be used in enclosed spaces such as distribution centres or in other logistics applications, such as at airports, where the environment is strictly controlled and/or predictable. Fixed routes which are not subject to unpredictable changes can normally be driven in such situations.

A different situation arises when self-driving vehicles are used in public spaces or on public roads. Although the actual route to be driven is mainly unchanged in the short or medium term in these situations also, environmental factors and, in particular, fellow road users on public roads, give rise to unpredictable situations. It is known for regularly updated and very detailed high-resolution maps to be used here, along with sensors for detecting fellow road users, but a satisfactory result has hitherto not been achieved therewith, particularly since the volume of data required to provide maps with a sufficient level of detail is unacceptably high in practice. In addition, although obstacles can be detected by means of the sensors, a subsequent difficulty lies in determining the necessary response. Document EP 3219564 discloses an autonomous vehicle that employs a deep neural net that ` converts live images and navigational instructions into steering and acceleration values.

One object of the present invention is therefore to provide a system for controlling a self-driving vehicle which does not have the aforementioned disadvantages. A further object of the present invention is to provide a vehicle equipped with a system of this type and another further object of the present invention is to provide a method for training a system of this type.

For this purpose, the invention relates to a system for controlling a self-driving vehicle controllable on the basis of control values and acceleration values, comprising a navigation module, a control module, at least one camera and a recognition module, wherein the navigation module is configured to receive a destination, chosen from a closed list of destinations, from a user, to determine a position of the vehicle, to determine a route from the position to the destination, to convert the route into navigation instructions, to supply the navigation instructions to the control module, to receive a recognition confirmation from the recognition module if a navigation point has been reached, wherein the camera is configured to capture live camera images from the vehicle and to supply the images to the control module and the recognition module, wherein the control module is configured to receive at least one navigation instruction from the navigation module, to receive the live camera images from the camera; and to convert the at least one navigation instruction and the camera images into control values and acceleration values for the controllable self-driving vehicle, and wherein the recognition module is configured to compare the live camera images with previously stored camera images annotated with at least characteristics of navigation points, and to determine that a navigation point has been reached if a live camera image has a predefined degree of correspondence with a camera image annotated with a navigation point, and to supply a recognition confirmation to the navigation module if it is determined that a navigation point has been reached.

The self-driving vehicle according to the invention is intended and configured for unmanned driving and, for example, for the "last mile" during the transport of parcels, baggage and other small business consignments, food distribution, message delivery and/or disposal of waste materials, and is preferably propelled by a non-CO2-emitting fuel source such as an electric drive or a drive with a fuel cell.

The system according to the present invention offers various advantages. First of all, the need for the use of detailed maps is eliminated through the use of navigation points and the comparison of camera images with previously stored images. The system in fact makes it possible to move from one navigation point to another on the basis of a relatively rough location indication, wherein the arrival at the exact location is determined through the comparison of camera images. An additional advantage is that, as a result, there is also no need to have positioning technology, such as GPS, whereby the system makes it possible to operate without receiving external reference signals.

The navigation instructions preferably comprise at least one direction indication, such as an exact geographical direction indication (in degrees), and geographical direction designation (such as "to the north") and/or specific direction indication (such as "off to the left"). On the basis thereof and on the basis of the received camera images, the control module can determine a control outcome with which the vehicle follows the intended direction indication.

The instructions may be in the form of a list, wherein a navigation point is designated in each case with at least one direction to be followed from that point. More preferably, the navigation instructions also comprise a speed indication which indicates, for example, the maximum speed applicable from the relevant navigation point in the indicated direction.

The system can therefore be configured in such a way that the navigation instructions are processed by the control module as target values or desired values which impose a maximum speed. The nature and circumstances of the route may give cause to maintain a speed which is lower than the target value.

It should be noted that, in a further preferred embodiment of the present invention, the live camera images and the previously stored camera images annotated with at least navigation points are compared after preprocessing, wherein recognition points determined in the live camera images, rather than the complete camera images, are compared with recognition points determined in the previously stored camera images. These recognition points are applied by algorithms used in the preprocessing and may, for example, be (combinations of) horizontal and vertical lines, or other characteristics preferably independent from the weather conditions and the time of day.

The navigation module is further preferably configured to supply a subsequent navigation instruction to the control module as soon as the recognition module has reported that a navigation point has been reached. In this way, the control module does not have to store a complete route, but in each case must always formulate control values and acceleration values to one navigation point.

In a further embodiment, the control module is configured to determine a way to convert the navigation instructions into direction values and acceleration values for the controllable self-driving on the basis of deep learning. Here, a route to be driven or an area to be driven is driven at least once, but preferably several times, wherein camera images are recorded which are processed by the control module. The module recognizes patterns in the images, for example distances to kerbs, white lines on the road, traffic signs, exits and the direction values and acceleration values given by the user thereto. After having been trained in this way, the system can itself generate direction values and acceleration values on the basis of video images.

A user who trains the control module can mark the navigation points. By making different choices at different times (such as the first time "off to the left" and the second time "off to the right") in the case of specific navigation points, such as intersections, the system learns that there are different possibilities at a location of this type, and also learns the direction values and acceleration values associated with the different choices. By also recording the relevant choice (for example turning "off to the left" or "off to the right"), the system can then perform an entered navigation instruction which corresponds to a choice of this type.

The deep learning technique is known per se and existing technologies can be used for the implementation thereof. A tried and tested system which appears to be suitable for the present invention is commercially available as Nvidia Dave 2 network topology.

Systems of this type offer a technology which enables a vehicle to demonstrate specifically learnt road users' behaviour, wherein vehicles remain independently on the road. By using navigation points and (visually) recognizing them, the present invention adds a navigation facility. The system thus uses technology existing per se to follow a route, but, as it recognizes the choice options, particularly at navigation points, it can follow instructions having a level of abstraction of "the second turn to the left", on the basis of camera images and without the location of the choice option having to be clear in advance.

The navigation instructions always apply from one navigation point to another and are therefore generated and forwarded at a relatively low frequency, depending on the distance between the navigation points. In order to be able to react appropriately to quickly changing traffic situations, the control module is preferably configured to provide control values and/or acceleration values at a frequency of at least 10 Hz, applied at a speed of a few kilometres per hour. This frequency can be chosen as higher in the case of a higher vehicle speed.

The system according to the present invention can optionally be implemented with a GPS system to recognize error situations. It can thus be determined, for example, whether the vehicle has more than one expected deviation from a navigation point when it is en route, and it can be concluded that an error has occurred. The system can be configured to issue an error message at such a time and send it to a central monitoring facility such as a traffic management centre or a monitoring room.

The system can furthermore be used in various traffic situations or circumstances by being trained in all these situations and by recording associated adaptations in driving behaviour. In this way, it can be configured, for example, to reduce speed on the basis of obstacles, weather conditions, illumination or quality of the road surface. The training can be defined on the basis of images and other data in the real world but also through interaction with virtual worlds in simulation.

The invention furthermore relates to a method for training a system according to the present invention, comprising the steps of: A. Driving of at least one autonomously drivable route by a driver with the controllable self-driving vehicle, B. Recording camera images of the route during the driving, C. Storing navigation points in relation to the camera images, and D. Annotating the navigation points with coordinates for the navigation module. It is similarly conceivable for a system to be trained to drive routes entirely in simulation. The simulations are partially fed by images recorded in the real world. These may be images of different routes.

In order to be able to train the system, the vehicle must be controllable and must be controlled by a driver who also drives at least one intended autonomously drivable route, or also drives in an area in which a plurality of routes are located. It may be that the driver is present in or on or near the vehicle, but it is preferable to configure the system in such a way that it is remotely operable and therefore trainable also. During the driving, the driver himself always provides control values and acceleration values which are linked by the system to camera images of the route recorded during the driving. In this way, the system learns which control values and acceleration values belong to which street or road layout and can generate the associated direction values and acceleration values following the training on the basis of live images, by repeatedly revisiting the navigation points for which a plurality of options (for example turn-offs) exist in the training and making different choices.

According to one preferred embodiment of the method according to the present invention, the camera images are recorded in a form preprocessed for image recognition. Instead of storing the entire image stream, characteristics from the image which are relevant to image recognition and/or location recognition are thus defined. Combinations of horizontal and vertical lines in the image, large areas or characteristic shapes can be envisaged here.

In order to eliminate the dependence on changing conditions, such as the time of day, the weather and/or the traffic density, the method according to the invention preferably comprises the repetition of step A. under different weather conditions and/or traffic conditions. The system learns to recognize the weather conditions and traffic conditions, and also the manner in which to react thereto. The camera images recorded during the training can then be processed offline, wherein, for example, they are preprocessed for image recognition, and/or a timestamp, steering angle and/or acceleration value is/are linked to the images.

In a more advanced system according to the invention, the system is configured to train one system on the basis of the camera images recorded by one or more systems of the same type. In this way, a self-learning system is created, and each vehicle does not have to be independently trained.

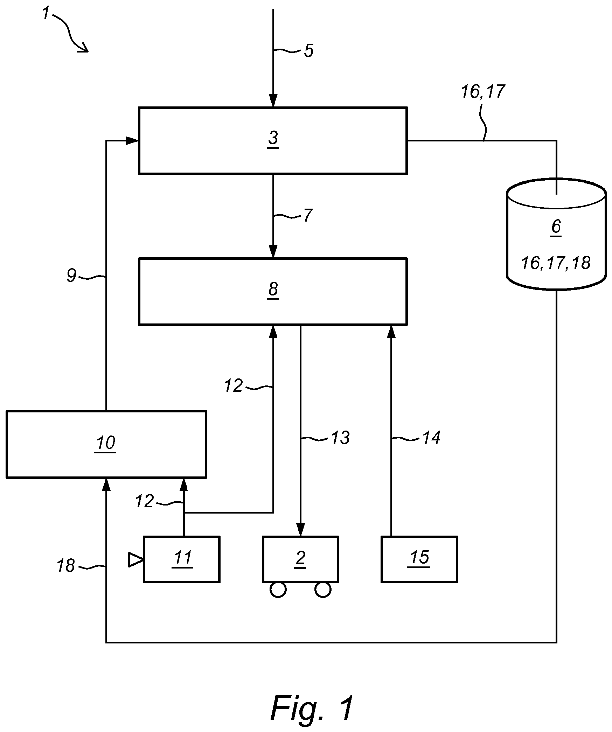

The invention will now be explained with reference to Figure 1, which provides a schematic representation of a system according to the present invention.

Figure 1 shows a system 1 for controlling a self-driving vehicle 2 controllable on the basis of control values and acceleration values, comprising a navigation module 3 which is configured to receive a destination 5, chosen from a closed list of destinations 16 stored in a data storage device 6, from a user, and to determine a position of the vehicle, for example by recording the last-known location 17 in the data storage device 6, to determine a route from the position to the destination, wherein said route can similarly be chosen from a list of possible routes which are similarly stored in the data storage device 6, to convert the route into navigation instructions, to supply the navigation instructions 7 to a control module 8, and to receive a recognition confirmation 9 from a recognition module 10. The system furthermore comprises a camera 11 which is configured to capture live camera images 12 from the vehicle 2 and to supply the images to the control module 8 and the recognition module 10. The control module 8 is furthermore configured to receive at least one navigation instruction 7 from the navigation module 3 and to receive the live camera images 12 from the camera 11 and to convert the at least one navigation instruction 7 and the camera images 12 into control values and acceleration values 13 for the controllable self-driving vehicle 2. In the embodiment shown, the control module 8 similarly makes use of an acceleration signal 14 obtained from an acceleration sensor 15. Finally, the recognition module 10 is configured to compare the live camera images 12 with previously stored camera images annotated with at least characteristics 18 of navigation points, and to determine that a navigation point has been reached if a live camera image 12 has a predefined degree of correspondence with a camera image 18 annotated with a navigation point, and to supply a recognition confirmation 9 to the navigation module if it is determined that a navigation point has been reached.

Along with the aforementioned example, many embodiments fall within the protective scope of the present application, as set out in the following claims.

## Claims

1. System for controlling a self-driving vehicle (2) controllable on the basis of control values and acceleration values, comprising:
- a navigation module (3);
- a control module (8);
- at least one camera (11);
- a recognition module (10);
wherein the navigation module is configured:
- to receive a destination, chosen from a closed list of destinations, from a user;
- to determine a position of the vehicle;
- to determine a route from the position to the destination;
- to convert the route into navigation instructions;
- to supply the navigation instructions to the control module;
- to receive a recognition confirmation from the recognition module;
wherein the camera is configured:
- to capture live camera images from the vehicle and to supply the images to the control module and the recognition module;
wherein the control module is configured:
- to receive at least one navigation instruction from the navigation module;
- to receive the live camera images from the camera;
- to convert the at least one navigation instruction and the camera images into control values and acceleration values for the controllable self-driving vehicle;
wherein the recognition module is configured:
- to receive live camera images;
- to compare the live camera images with previously stored camera images annotated with at least characteristics of navigation points;
- to determine that a navigation point has been reached if a live camera image has a predefined degree of correspondence with a camera image annotated with a navigation point; and
- to supply a recognition confirmation to the navigation module if it is determined that a navigation point has been reached.

2. System according to Claim 1, wherein:
- the navigation module is configured to convert the destination received from the user into direction instructions, such as:
∘ an exact geographical direction indication (in degrees),
∘ a geographical direction (such as "to the north"); and/or
∘ a specific direction indication (such as "off to the left"); and wherein
- the control module is configured to receive the direction instructions and to convert the direction instructions into control values and acceleration values.

3. System according to Claim 1 or 2, configured to compare the live camera images and the previously stored camera images annotated with at least navigation points after a preprocessing step, wherein recognition points determined in the live camera images, rather than the complete camera images, are compared with recognition points determined in the previously stored camera images.

4. System according to one of the preceding claims, wherein the navigation module is configured to supply a subsequent navigation instruction to the control module as soon as the recognition module has reported that a navigation point has been reached.

5. System according to one of the preceding claims, wherein the control module is configured to determine a way to convert the navigation instructions into direction values and acceleration values for the controllable self-driving on the basis of deep learning.

6. System according to one of the preceding claims, wherein the control module is configured to provide direction instructions and acceleration instructions at a frequency of at least 10 Hz.

7. System according to one of the preceding claims, provided with a GPS system to recognize error situations.

8. System according to one of the preceding claims, configured to reduce speed on the basis of weather conditions, illumination or quality of the road surface.

9. System according to one of the preceding claims, comprising an acceleration sensor to supply acceleration information from the vehicle to the control module.

10. Vehicle provided with a system according to one of the preceding claims.

11. Method for training a system according to any of claims 1-9, comprising:
- A. Driving of at least one intended autonomously drivable route by a driver with the controllable self-driving vehicle;
- B. Recording camera images of the route during the driving;
- C. Storing navigation points in relation to the camera images;
- D. Annotating the navigation points with coordinates for the navigation module.

12. Method according to Claim 11, comprising the recording of the camera images in a form preprocessed for image recognition.

13. Method according to Claim 11 or 12, comprising the repetition of step A. under different weather conditions and/or traffic conditions.

14. Method according to one of Claims 11-13, comprising the recording of a timestamp, steering angle and/or speed during the driving of the route.

15. Method according to one of Claims 11-14 configured to train one system according to one of Claims 1-9 on the basis of the live camera images recorded by one or more systems of the same type.

## Patentansprüche

1. System zum Steuern eines selbstfahrenden Fahrzeugs (2), steuerbar auf der Grundlage von Steuerwerten und Beschleunigungswerten, das Folgendes umfasst:
- ein Navigationsmodul (3);
- ein Steuerungsmodul (8);
- mindestens eine Kamera (11);
- ein Erkennungsmodul (10);
wobei das Navigationsmodul ausgelegt ist zum:
- Empfangen eines Bestimmungsorts, gewählt aus einer geschlossenen Liste von Bestimmungsorten, von einem Benutzer;
- Bestimmen einer Position des Fahrzeugs;
- Bestimmen einer Route von der Position zum Bestimmungsort;
- Umwandeln der Route in Navigationsanweisungen;
- Zuführen der Navigationsanweisungen zum Steuerungsmodul;
- Empfangen einer Erkennungsbestätigung von dem Erkennungsmodul;
wobei die Kamera ausgelegt ist zum:
- Aufnehmen von Kamera-Live-Bildern von dem Fahrzeug und Zuführen der Bilder zum Steuerungsmodul und zum Erkennungsmodul;
wobei das Steuerungsmodul ausgelegt ist zum:
- Empfangen mindestens einer Navigationsanweisung von dem Navigationsmodul;
- Empfangen der Kamera-Live-Bilder von der Kamera;
- Umwandeln der mindestens einen Navigationsanweisung und der Kamerabilder in Steuerwerte und Beschleunigungswerte für das steuerbare selbstfahrende Fahrzeug;
wobei das Erkennungsmodul ausgelegt ist zum:
- Empfangen von Kamera-Live-Bildern;
- Vergleichen der Kamera-Live-Bilder mit zuvor gespeicherten Kamerabildern, die zumindest mit Charakteristika von Navigationspunkten kommentiert sind;
- Bestimmen, dass ein Navigationspunkt erreicht wurde, wenn ein Kamera-Live-Bild einen vordefinierten Übereinstimmungsgrad mit einem Kamerabild aufweist, das mit einem Navigationspunkt kommentiert ist; und
- Zuführen einer Erkennungsbestätigung zum Navigationsmodul, wenn bestimmt wurde, dass ein Navigationspunkt erreicht wurde.

2. System nach Anspruch 1, wobei:
- das Navigationsmodul ausgelegt ist zum Umwandeln des von dem Benutzer empfangenen Bestimmungsorts in Richtungsanweisungen, wie etwa:
∘ eine exakte geographische Richtungsangabe (in Grad),
∘ eine geographische Richtung (wie etwa "nach Norden"); und/oder
∘ eine spezifische Richtungsangabe (wie etwa "nach links"); und wobei
- das Steuerungsmodul ausgelegt ist zum Empfangen der Richtungsanweisungen und zum Umwandeln der Richtungsanweisungen in Steuerwerte und Beschleunigungswerte.

3. System nach Anspruch 1 oder 2, ausgelegt zum Vergleichen der Kamera-Live-Bilder und der zuvor gespeicherten Kamerabilder, die nach einem Vorverarbeitungsschritt zumindest mit Navigationspunkten kommentiert sind, wobei in den Kamera-Live-Bildern bestimmte Erkennungspunkte, anstatt der vollständigen Kamerabilder, mit Erkennungspunkten verglichen werden, die in den zuvor gespeicherten Kamerabildern bestimmt wurden.

4. System nach einem der vorhergehenden Ansprüche, wobei das Navigationsmodul ausgelegt ist zum Zuführen einer nachfolgenden Navigationsanweisung zum Steuerungsmodul, sobald das Erkennungsmodul gemeldet hat, dass ein Navigationspunkt erreicht wurde.

5. System nach einem der vorhergehenden Ansprüche, wobei das Steuerungsmodul ausgelegt ist zum Bestimmen eines Weges, um die Navigationsanweisungen auf der Grundlage von Deep-Learning in Richtungswerte und Beschleunigungswerte für das steuerbare Selbstfahren umzuwandeln.

6. System nach einem der vorhergehenden Ansprüche, wobei das Steuerungsmodul ausgelegt ist zum Liefern von Richtungsanweisungen und Beschleunigungsanweisungen mit einer Frequenz von mindestens 10 Hz.

7. System nach einem der vorhergehenden Ansprüche, versehen mit einem GPS-System, um Fehlersituationen zu erkennen.

8. System nach einem der vorhergehenden Ansprüche, ausgelegt zum Verringern der Geschwindigkeit auf der Grundlage von Wetterbedingungen, Beleuchtung oder Qualität der Straßenoberfläche.

9. System nach einem der vorhergehenden Ansprüche, umfassend einen Beschleunigungssensor zum Zuführen von Beschleunigungsinformationen von dem Fahrzeug zum Steuerungsmodul.

10. Fahrzeug, das mit einem System nach einem der vorhergehenden Ansprüche ausgestattet ist.

11. Verfahren zum Trainieren eines Systems nach einem der Ansprüche 1-9, das Folgendes umfasst:
- A.Fahren mindestens einer beabsichtigten autonom fahrbaren Route durch einen Fahrer mit dem steuerbaren selbstfahrenden Fahrzeug;
- B.Aufzeichnen von Kamerabildern der Route während des Fahrens;
- C. Speichern von Navigationspunkten mit Bezug auf die Kamerabilder;
- D. Kommentieren der Navigationspunkte mit Koordinaten für das Navigationsmodul.

12. Verfahren nach Anspruch 11, umfassend das Aufzeichnen der Kamerabilder in einer für Bilderkennung vorverarbeiteten Form.

13. Verfahren nach Anspruch 11 oder 12, umfassend die Wiederholung von Schritt A unter unterschiedlichen Wetterbedingungen und/oder Verkehrsbedingungen.

14. Verfahren nach einem der Ansprüche 11 bis 13, umfassend das Aufzeichnen eines Zeitstempels, eines Lenkwinkels und/oder der Geschwindigkeit während des Fahrens der Route.

15. Verfahren nach einem der Ansprüche 11-14, ausgelegt zum Trainieren eines Systems nach einem der Ansprüche 1-9 auf der Grundlage der Kamera-Live-Bilder, die durch eines oder mehrere Systeme der gleichen Art aufgezeichnet wurden.

## Revendications

1. Système de commande d'un véhicule autonome (2) pouvant être commandé sur la base de valeurs de commande et de valeurs d'accélération, comprenant :
- un module de navigation (3) ;
- un module de commande (8) ;
- au moins une caméra (11) ;
- un module de reconnaissance (10) ;
où le module de navigation est configuré :
- pour recevoir d'un utilisateur une destination choisie dans une liste fermée de destinations ;
- pour déterminer une position du véhicule ;
- pour déterminer un itinéraire de la position à la destination ;
- pour convertir l'itinéraire en instructions de navigation ;
- pour fournir les instructions de navigation au module de commande ;
- pour recevoir une confirmation de reconnaissance depuis le module de reconnaissance ;
où la caméra est configurée :
- pour capturer des images de caméra en direct à partir du véhicule et pour fournir les images au module de commande et au module de reconnaissance ;
où le module de commande est configuré :
- pour recevoir au moins une instruction de navigation du module de navigation ;
- pour recevoir les images en direct de la caméra ;
- pour convertir l'au moins une instruction de navigation et les images de la caméra en valeurs de commande et en valeurs d'accélération pour le véhicule autonome commandable ;
où le module de reconnaissance est configuré :
- pour recevoir des images de caméra en direct ;
- pour comparer les images de caméra en direct avec des images de caméra préalablement enregistrées et annotées avec au moins des caractéristiques de points de navigation ;
- pour déterminer qu'un point de navigation a été atteint si une image de caméra en direct a un degré prédéfini de correspondance avec une image de caméra annotée avec un point de navigation ; et
- pour fournir une confirmation de reconnaissance au module de navigation s'il est déterminé qu'un point de navigation a été atteint.

2. Système selon la revendication 1, dans lequel :
- le module de navigation est configuré pour convertir la destination reçue de l'utilisateur en instructions de direction, telles que :
o une indication de direction géographique exacte (en degrés),
o une direction géographique (telle que « vers le nord ») ; et/ou
o une indication de direction spécifique (telle que « à gauche ») ; et où :
- le module de commande est configuré pour recevoir les instructions de direction et pour convertir les instructions de direction en valeurs de commande et en valeurs d'accélération.

3. Système selon la revendication 1 ou la revendication 2, configuré pour comparer les images de caméra en direct et les images de caméra précédemment stockées annotées avec au moins des points de navigation après une étape de prétraitement, où les points de reconnaissance déterminés dans les images de caméra en direct, plutôt que les images de caméra complètes, sont comparés aux points de reconnaissance déterminés dans les images de caméra précédemment stockées.

4. Système selon l'une des revendications précédentes, dans lequel le module de navigation est configuré pour fournir une instruction de navigation ultérieure au module de commande dès que le module de reconnaissance a signalé qu'un point de navigation a été atteint.

5. Système selon l'une des revendications précédentes, dans lequel le module de commande est configuré pour déterminer une manière de convertir les instructions de navigation en valeurs de direction et en valeurs d'accélération pour la conduite autonome commandable sur la base d'un apprentissage profond.

6. Système selon l'une des revendications précédentes, dans lequel le module de commande est configuré pour fournir des instructions de direction et des instructions d'accélération à une fréquence d'au moins 10 Hz.

7. Système selon l'une des revendications précédentes, lequel est muni d'un système GPS pour reconnaître les situations d'erreur.

8. Système selon l'une des revendications précédentes, lequel est configuré pour réduire la vitesse sur la base des conditions météorologiques, de l'éclairage ou de la qualité du revêtement routier.

9. Système selon l'une des revendications précédentes, comprenant un capteur d'accélération pour fournir des informations sur l'accélération du véhicule au module de commande.

10. Véhicule équipé d'un système selon l'une des revendications précédentes.

11. Procédé de formation d'un système selon l'une quelconque des revendications 1 à 9, le procédé comprenant les étapes suivantes :
A. Parcourir avec un conducteur au moins un itinéraire destiné à être parcouru de manière autonome avec le véhicule autonome commandable ;
B. Enregistrer des images de caméra de l'itinéraire pendant la conduite ;
C. Stocker des points de navigation en relation avec les images de caméra ;
D. Annoter les points de navigation avec des coordonnées pour le module de navigation.

12. Procédé selon la revendication 11, comprenant d'enregistrer les images de la caméra sous une forme prétraitée pour la reconnaissance d'images.

13. Procédé selon la revendication 11 ou la revendication 12, comprenant de répéter l'étape A. dans des conditions météorologiques et/ou de circulations différentes.

14. Procédé selon l'une des revendications 11 à 13, comprenant d'enregistrer un horodatage, un angle de braquage et/ou une vitesse pendant la conduite sur le trajet.

15. Procédé selon l'une des revendications 11 à 14, configuré pour entraîner un système selon l'une des revendications 1 à 9 sur la base des images de caméra en direct enregistrées par un ou plusieurs systèmes du même type.
